# EUROPÄISCHE PATENTSCHRIFT

(11) **EP 1 888 897 B1**
(45) Veröffentlichungstag und Bekanntmachung des Hinweises auf die Patenterteilung: **16.09.2009**
(21) Anmeldenummer: 06755129.1
(22) Anmeldetag: 10.05.2006
(51) Int. Cl.: F02D 41/02, F01N 11/00

(54) **VERFAHREN UND VORRICHTUNG ZUM ERMITTELN EINER SAUERSTOFFSPEICHERKAPAZITÄT DES ABGASKATALYSATORS EINER BRENNKRAFTMASCHINE UND VERFAHREN UND VORRICHTUNG ZUM ERMITTELN EINER DYNAMIK-ZEITDAUER FÜR ABGASSONDEN EINER BRENNKRAFTMASCHINE**
METHOD AND DEVICE FOR DETERMINING THE OXYGEN STORAGE CAPACITY OF THE EXHAUST GAS CATALYTIC CONVERTER OF AN INTERNAL COMBUSTION ENGINE, AND METHOD AND DEVICE FOR DETERMINING A DYNAMIC TIME DURATION FOR EXHAUST GAS PROBES OF AN INTERNAL COMBUSTION ENGINE
PROCEDE ET DISPOSITIF DE DETERMINATION D'UNE CAPACITE DE STOCKAGE D'OXYGENE DU POT CATALYTIQUE D'UN MOTEUR A COMBUSTION INTERNE ET PROCEDE ET DISPOSITIF PERMETTANT DE DETERMINER UNE DUREE DYNAMIQUE DESTINEE A DES SONDES DE GAZ D'ECHAPPEMENT D'UN MOTEUR A COMBUSTION INTERNE

(30) Priorität: 31.05.2005 DE 102005024872
(43) Veröffentlichungstag der Anmeldung: 20.02.2008
(73) Patentinhaber: Continental Automotive GmbH, 30165 Hannover (DE)
(72) Erfinder: ARLT, Tino, 93059 Regensburg (DE); RÖSEL, Gerd, 93055 Regensburg (DE)
(86) Internationale Anmeldenummer: PCT/EP2006/062212
(87) Internationale Veröffentlichungsnummer: WO 2006/128782

(56) Entgegenhaltungen:
- EP-A- 1 191 196
- DE-B3- 10 307 010
- US-A1- 2003 017 603
- US-A1- 2004 006 971

## Beschreibung

Die Erfindung betrifft ein Verfahren und eine Vorrichtung zum Ermitteln einer Sauerstoffspeicherkapazität eines Abgaskatalysators einer Brennkraftmaschine. Sie betrifft ferner ein Verfahren und eine Vorrichtung zum Ermitteln einer Dynamik-Zeitdauer für Abgassonden einer Brennkraftmaschine. Aus der US 2004/006971 ist ein Verfahren zum Ermitteln einer Sauerstoffspeicherkapazität bekannt.

Immer strengere gesetzliche Vorschriften bezüglich zulässiger Schadstoffemissionen von Kraftfahrzeugen, in denen Brennkraftmaschinen angeordnet sind, machen es erforderlich, die Schadstoffemissionen beim Betrieb der Brennkraftmaschine so gering wie möglich zu halten. Dies kann zum einen erfolgen, indem die Schadstoffemissionen verringert werden, die während der Verbrennung des Luft/Kraftstoff-Gemisches in dem jeweiligen Zylinder der Brennkraftmaschine entstehen. Zum andern sind in Brennkraftmaschinen Abgasnachbehandlungssysteme im Einsatz, die die Schadstoffemissionen, die während des Verbrennungsprozesses des Luft/Kraftstoff-Gemisches in den jeweiligen Zylindern erzeugt werden, in unschädliche Stoffe umwandeln. Zu diesem Zweck werden Katalysatoren eingesetzt, die Kohlenmonoxid, Kohlenwasserstoffe und Stickoxide in unschädliche Stoffe umwandeln. Sowohl das gezielte Beeinflussen des Erzeugens der Schadstoffemissionen während der Verbrennung als auch das Umwandeln der Schadstoffkomponenten mit einem hohen Wirkungsgrad durch einen Abgaskatalysator setzen ein sehr präzise eingestelltes Luft/Kraftstoff-Verhältnis in dem jeweiligen Zylinder voraus.

In diesem Zusammenhang muss sichergestellt werden, dass die Komponenten des Abgasnachbehandlungssystems auch in der gewünschten Art und Weise über eine lange Betriebsdauer funktionieren und Fehler zuverlässig erkannt werden.

Aufgabe der Erfindung ist es gemäß eines Aspekts ein Verfahren und eine Vorrichtung zu schaffen, die ein präzises Ermitteln einer Sauerstoffspeicherkapazität eines Abgaskatalysators einer Brennkraftmaschine ermöglicht. Die Aufgabe der Erfindung gemäß eines weiteren Aspekts ist es, ein Verfahren und eine Vorrichtung zu schaffen, das beziehungsweise die ein präzises Ermitteln einer Dynamik-Zeitdauer für Abgassonden einer Brennkraftmaschine ermöglicht.

Die Aufgabe wird gelöst durch die Merkmale der unabhängigen Ansprüche. Vorteilhafte Ausgestaltungen der Erfindung sind in den Unteransprüchen gekennzeichnet.

Die Erfindung zeichnet sich aus gemäß eines ersten Aspekts durch ein Verfahren und eine entsprechende Vorrichtung zum Ermitteln einer Sauerstoffspeicherkapazität eines Abgaskatalysators einer Brennkraftmaschine mit mindestens einem Zylinder und einem Abgastrakt, in dem der Abgaskatalysator und eine Abgassonde stromabwärts zumindest eines Teils des Abgaskatalysators angeordnet sind. Der bezüglich der Abgassonde stromaufwärtige Teil des Abgaskatalysators wird mit Sauerstoff beladen, bis er gesättigt ist. Ein vorgegebenes erstes fettes Luft/Kraftstoff-Verhältnis in dem Brennraum des Zylinders wird eingestellt. Ein erster Sauerstoffspeicherkapazitätswert wird ermittelt abhängig von dem Messsignal der Abgassonde und dem vorgegebenen ersten fetten Luft/KraftstoffVerhältnis. Der bezüglich der Abgassonde stromaufwärtige Teil des Abgaskatalysators wird mit Sauerstoff beladen, bis er gesättigt ist. Ein vorgegebenes zweites fettes Luft/KraftstoffVerhältnis wird in dem Brennraum des Zylinders eingestellt. Ein zweiter Sauerstoffspeicherkapazitätswert wird ermittelt abhängig von dem Messsignal der Abgassonde und dem vorgegebenen zweiten fetten Luft/Kraftstoff-Verhältnis. Ein korrigierter Sauerstoffspeicherkapazitätswert wird abhängig von dem ersten und zweiten Sauerstoffspeicherkapazitätswerten ermittelt.

Die Erfindung nutzt die Erkenntnis, dass ein geändertes Ansprechverhalten der Abgassonde durch Alterung oder dergleichen zu einem Fehler bei dem Ermitteln der ersten und zweiten Sauerstoffspeicherkapazitätswerte führt, die jedoch aufgrund des unterschiedlichen Luft/Kraftstoff-Verhältnisses unterschiedlich sind. Dies ermöglicht auf einfache Weise den korrigierten Sauerstoffspeicherkapazitätswert abhängig von dem ersten und zweiten Sauerstoffspeicherkapazitätswert zu ermitteln und so den Fehler durch das geänderte Ansprechverhalten der Abgassonde einfach und weitgehend zu eliminieren.

Gemäß eines zweiten Aspekts zeichnet sich die Erfindung aus durch ein Verfahren und eine entsprechende Vorrichtung zum Ermitteln einer Sauerstoffspeicherkapazität eines Abgaskatalysators einer Brennkraftmaschine mit mindestens einem Zylinder und einem Abgastrakt, in dem der Abgaskatalysator und eine Abgassonde stromabwärts zumindest eines Teils des Abgaskatalysators angeordnet sind. Der bezüglich der Abgassonde in dem stromaufwärtigen Teil des Abgaskatalysators gespeicherte Sauerstoff wird ganz entladen. Ein vorgegebenes erstes mageres Luft/Kraftstoff-Verhältnis in dem Brennraum des Zylinders wird eingestellt. Ein erster Sauerstoffspeicherkapazitätswert wird ermittelt abhängig von dem Messsignal der Abgassonde und dem vorgegebenen ersten mageren Luft/Kraftstoff-Verhältnis.

Der bezüglich der Abgassonde in dem stromaufwärtige Teil des Abgaskatalysators gespeicherte Sauerstoff wird ganz entladen. Ein vorgegebenes zweites mageres Luft/Kraftstoff-Verhältnis in dem Brennraum des Zylinders wird eingestellt. Ein zweiter Sauerstoffspeicherkapazitätswert wird ermittelt abhängig von dem Messsignal der Abgassonde und dem vorgegebenen zweiten mageren Luft/Kraftstoff-Verhältnis. Ein korrigierter Sauerstoffspeicherkapazitätswert wird abhängig von den ersten und zweiten Sauerstoffspeicherkapazitätswerten ermittelt. Auch auf diese Weise kann ein entsprechendes Vorgehen des ersten Aspekts der Erfindung Fehler beim Ermitteln des Sauerstoffspeicherkapazitätswertes weitgehend eliminiert werden.

Gemäß einer vorteilhaften Ausgestaltung wird ein Korrekturwert abhängig von einer Differenz des ersten und zweiten Sauerstoffspeicherkapazitätswertes ermittelt und der korrigierte Sauerstoffspeicherkapazitätswert abhängig von dem zweiten Sauerstoffspeicherkapazitätswert und dem Korrekturwert ermittelt. So kann der korrigierte Sauerstoffspeicherkapazitätswert sehr einfach ermittelt werden.

In diesem Zusammenhang ist es vorteilhaft, wenn der Korrekturwert aus einem Kennfeld abhängig von der Differenz des ersten und zweiten Sauerstoffspeicherkapazitätswerts ermittelt wird. Dies ist besonders präzise und das Kennfeld kann einfach durch Versuche oder Simulationen ermittelt werden.

Gemäß einer weiteren vorteilhaften Ausgestaltung wird der Korrekturwert mittels einer abschnittsweisen linearen Funktion abhängig von der Differenz des ersten und zweiten Sauerstoffspeicherkapazitätswertes ermittelt. Dies hat den Vorteil eines geringen Speicherbedarfs für die abschnittsweise lineare Funktion und ermöglicht ein einfaches und präzises Ermitteln des Korrekturwertes.

Gemäß einer weiteren vorteilhaften Ausgestaltung wird der Korrekturwert abhängig von dem ersten, zweiten oder einem dritten fetten beziehungsweise mageren Luft/KraftstoffVerhältnis ermittelt. Das dritte fette beziehungsweise magere Luft/Kraftstoff-Verhältnis ist weniger fett beziehungsweise weniger mager als das erste oder zweite. Auf diese Weise kann einfach der Korrekturwert präzise ermittelt werden.

Bevorzugt ist das dritte fette beziehungsweise magere Luft/Kraftstoff-Verhältnis geeignet so vorgegeben, dass es geeignet nahe an dem stöchiometrischen Luft/KraftstoffVerhältnis liegt. Das dritte fette beziehungsweise magere Luft/Kraftstoff-Verhältnis entspricht somit bevorzugt im Wesentlichen dem stöchiometrischen Luft/Kraftstoff-Verhältnis. In diesem Zusammenhang wird die Erkenntnis genutzt, dass bei dem geeignet gewählten dritten fetten beziehungsweise mageren Luft/Kraftstoff-Verhältnis sich eine Änderung der Ansprechzeit der Abgassonde nur vernachlässigbar auf einen derart ermittelbaren Sauerstoffspeicherkapazitätswert auswirkt.

In diesem Zusammenhang ist es besonders vorteilhaft, wenn der Korrekturwert abhängig von einer Differenz des dritten und des zweiten Luft/Kraftstoff-Verhältnisses dividiert durch eine Differenz des ersten und des zweiten Luft/Kraftstoff-Verhältnisses ermittelt wird. Dies ermöglicht einfach ein äußerst präzises Ermitteln des Korrekturwertes.

Besonders vorteilhaft kann eine Diagnose des Abgaskatalysators erfolgen abhängig von dem korrigierten Sauerstoffspeicherkapazitätswert. Der korrigierte Sauerstoffspeicherkapazitätswert ist ein Maß für den Wirkungsgrad des Abgaskatalysators. Die Diagnose kann beispielsweise das Überprüfen des korrigierten Sauerstoffspeicherkapazitätswertes auf das Einhalten eines vorgebbaren Wertebereichs beinhalten.

Gemäß eines dritten Aspekts zeichnet sich die Erfindung aus durch ein Verfahren und eine entsprechende Vorrichtung zum Ermitteln einer Dynamik-Zeitdauer einer Abgassonde einer Brennkraftmaschine mit mindestens einem Zylinder und einem Abgastrakt, in dem der Abgaskatalysator und die Abgassonde stromabwärts zumindest eines Teils des Abgaskatalysators angeordnet sind. Der bezüglich der Abgassonde stromaufwärtige Teil des Abgaskatalysators wird mit Sauerstoff beladen, bis er gesättigt ist. Ein vorgegebenes erstes fettes Luft/Kraftstoff-Verhältnis in dem Brennraum des Zylinders wird eingestellt. Ein erster Sauerstoffspeicherkapazitätswert wird ermittelt abhängig von dem Messsignal der Abgassonde und dem vorgegebenen ersten fetten Luft/Kraftstoff-Verhältnis. Der bezüglich der Abgassonde stromaufwärtige Teil des Abgaskatalysators wird mit Sauerstoff beladen, bis er gesättigt ist. Ein vorgegebenes zweites fettes Luft/KraftstoffVerhältnis wird in dem Brennraum des Zylinders eingestellt. Ein zweiter Sauerstoffspeicherkapazitätswert wird ermittelt abhängig von dem Messsignal der Abgassonde und dem vorgegebenen ersten fetten Luft/Kraftstoff-Verhältnis und der Dynamik-Zeitdauer. Die Dynamik-Zeitdauer wird abhängig von den ersten und zweiten Sauerstoffspeicherkapazitätswerten ermittelt.

Die Dynamik-Zeitdauer repräsentiert die zeitliche Änderung des Ansprechverhaltens der Abgassonde im Vergleich zu ihrem Neuzustand. Die Dynamik-Zeitdauer kann so einfach und präzise ermittelt werden.

Gemäß eines vierten Aspekts zeichnet sich die Erfindung aus durch ein Verfahren und eine entsprechende Vorrichtung zum Ermitteln der Dynamik-Zeitdauer für eine Abgassonde der Brennkraftmaschine. Der vierte Aspekt unterscheidet sich von dem dritten Aspekt dadurch, dass die ersten und zweiten Sauerstoffspeicherkapazitätswerte gemäß des Vorgehens des zweiten Aspekts der Erfindung ermittelt werden.

Gemäß einer vorteilhaften Ausgestaltung des dritten oder vierten Aspekts der Erfindung erfolgt eine Diagnose der ersten und/oder zweiten Abgassonde abhängig von der Dynamik-Zeitdauer. Die Diagnose kann beispielsweise darin bestehen, dass die Dynamik-Zeitdauer auf das Über- oder Unterschreiten eines vorgebbaren Wertebereichs überprüft wird.

Ausführungsbeispiele der Erfindung sind im Folgenden anhand der schematischen Zeichnung erläutert.

Es zeigen:
Figur 1 eine Brennkraftmaschine mit einer Steuervorrichtung,
Figur 2 ein Ablaufdiagramm eines Programms, das in der Steuervorrichtung abgearbeitet wird, und
Figur 3 und 4 verschiedene Signalverläufe.

Elemente gleicher Konstruktion oder Funktion sind figuren-übergreifend mit den gleichen Bezugskennzeichen gekennzeichnet.

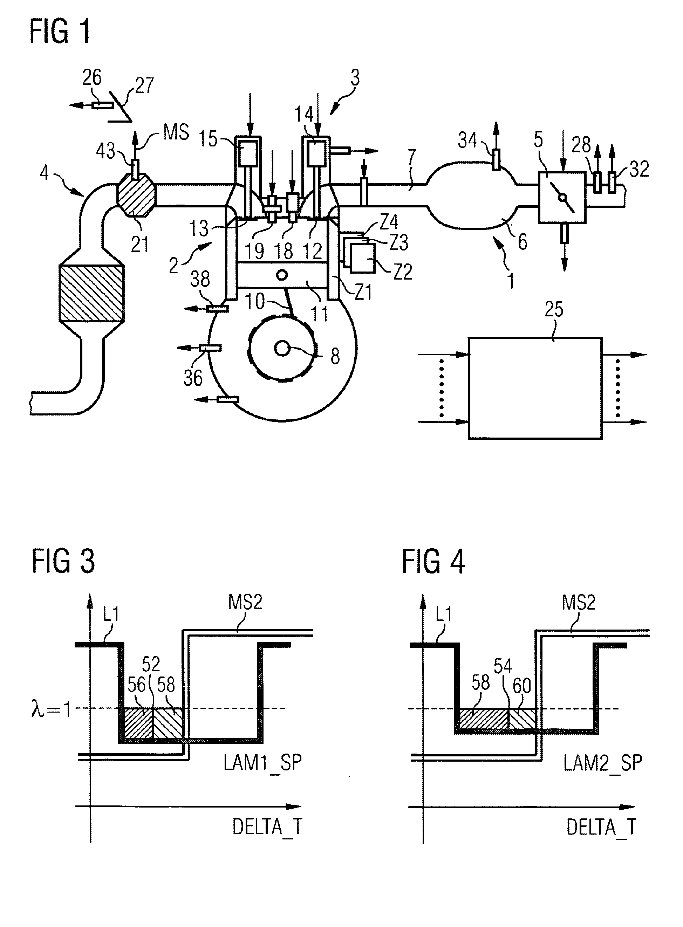

Eine Brennkraftmaschine (Figur 1) umfasst einen Ansaugtrakt 1, einen Motorblock 2, einen Zylinderkopf 3 und einen Abgastrakt 4. Der Ansaugtrakt 1 umfasst vorzugsweise eine Drosselklappe 5, ferner einen Sammler 6 und ein Saugrohr 7, das hin zu einem Zylinder Z1 über einen Einlasskanal in den Motorblock 2 geführt ist. Der Motorblock 2 umfasst ferner eine Kurbelwelle 8, welche über eine Pleuelstange 10 mit dem Kolben 11 des Zylinders Z1 gekoppelt ist.

Der Zylinderkopf 3 umfasst einen Ventiltrieb mit einem Gaseinlassventil 12 und einem Gasauslassventil 13.

Der Zylinderkopf 3 umfasst ferner ein Einspritzventil 18 und eine Zündkerze 19. Alternativ kann das Einspritzventil 18 auch in dem Saugrohr 7 angeordnet sein.

In dem Abgastrakt ist ein Abgaskatalysator angeordnet, der einen Dreiwegekatalysator 21 umfasst. Der Abgaskatalysator kann jedoch noch einen oder mehrere weitere Dreiwegekatalysatoren oder beispielsweise auch einen NOX-Katalysator umfassen.

Eine Steuervorrichtung 25 ist vorgesehen, der Sensoren zugeordnet sind, die verschiedene Messgrößen erfassen und jeweils den Wert der Messgröße ermitteln. Die Steuervorrichtung 25 ermittelt abhängig von mindestens einer der Messgrößen Stellgrößen, die dann in ein oder mehrere Stellsignale zum Steuern der Stellglieder mittels entsprechender Stellantriebe umgesetzt werden. Die Steuervorrichtung 25 kann auch als Vorrichtung zum Steuern der Brennkraftmaschine bezeichnet werden.

Die Sensoren sind ein Pedalstellungsgeber 26, welcher eine Fahrpedalstellung eines Fahrpedals 27 erfasst, ein Luftmassensensor 28, welcher einen Luftmassenstrom stromaufwärts der Drosselklappe 5 erfasst, ein erster Temperatursensor 32, welcher eine Ansauglufttemperatur erfasst, ein Saugrohrdrucksensor 34, welcher einen Saugrohrdruck in dem Sammler 6 erfasst, ein Kurbelwellenwinkelsensor 36, welcher einen Kurbelwellenwinkel erfasst, dem dann eine Drehzahl zugeordnet wird.

Ferner ist eine Abgassonde 43 vorgesehen, die stromabwärts zumindest eines Teils des Dreiwegekatalysators 21 angeordnet ist und die einen Restsauerstoffgehalt des Abgases erfasst und deren Messsignal charakteristisch ist für das Luft/Kraftstoff-Verhältnis in dem Brennraum des Zylinders Z1 und stromaufwärts der Abgassonde 43 vor der Oxidation des Kraftstoffs, im folgenden bezeichnet als das Luft/KraftstoffVerhältnis stromabwärts des Abgaskatalysators. Die Abgassonde 43 ist bevorzugt in dem Dreiwegekatalysator 21 angeordnet. Sie kann jedoch auch stromabwärts des Dreiwegekatalysators 21 angeordnet sein.

Die Abgassonde 43 ist bevorzugt eine binäre Lambdasonde. Sie kann jedoch auch eine lineare Lambdasonde sein.

Je nach Ausführungsform der Erfindung kann eine beliebige Untermenge der genannten Sensoren vorhanden sein oder es können auch zusätzliche Sensoren vorhanden sein.

Die Stellglieder sind beispielsweise die Drosselklappe 5, die Gaseinlass- und Gasauslassventile 12, 13, das Einspritzventil 18 oder die Zündkerze 19.

Neben dem Zylinder Z1 sind bevorzugt auch noch weitere Zylinder Z2 bis Z4 vorgesehen, denen dann auch entsprechende Stellglieder und ggf. Sensoren zugeordnet sind.

Ein Programm ist in einem Programmspeicher der Steuervorrichtung 25 gespeichert und kann während des Betriebs der Brennkraftmaschine abgearbeitet werden. Mittels des Programms kann ein korrigierter Sauerstoffspeicherkapazitätswert OSC_COR ermittelt werden oder auch eine Dynamik-Zeitdauer DELTA_T.

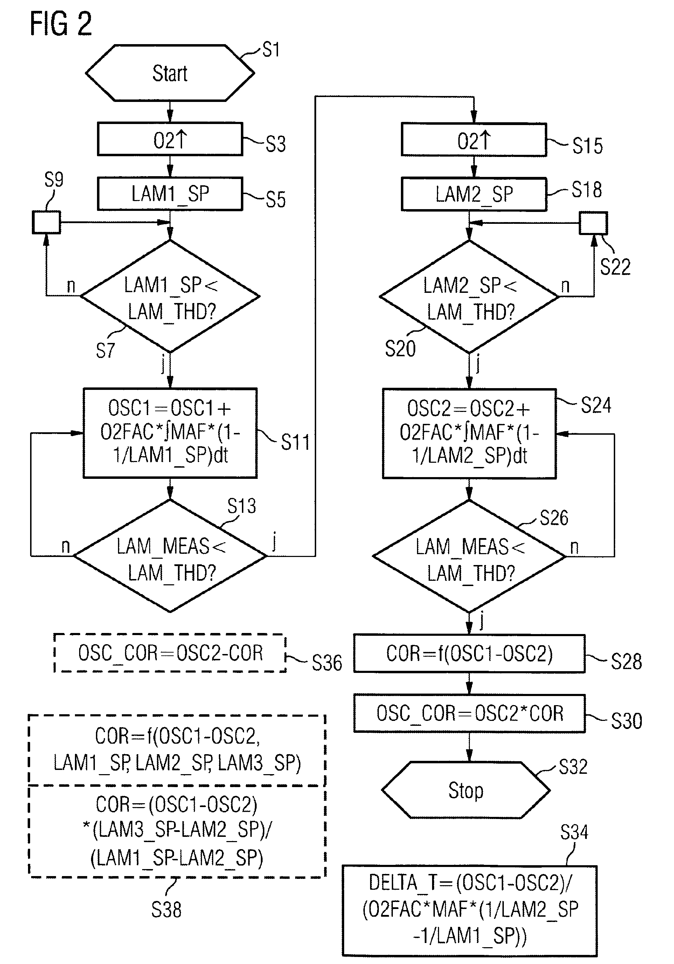

Das Programm wird in einem Schritt S1 (Figur 2) gestartet, in dem gegebenenfalls Variablen initialisiert werden. So werden in dem Schritt S1 beispielsweise erste und zweite Sauerstoffspeicherkapazitätswerte OSC1, OSC2 mit einem neutralen Wert belegt. Der Start erfolgt bevorzugt dann, wenn ein neuer korrigierter Sauerstoffspeicherkapazitätswert OSC_COR oder eine neue Dynamik-Zeitdauer DELTA_T ermittelt werden soll. Dies kann beispielsweise einmal pro Motorlauf oder auch in fest vorgegebenen Zeitabständen oder auch nach einer vorgebbaren Fahrdistanz erfolgen.

In einem Schritt S3 wird der Dreiwegekatalysator 21 bezüglich des der Abgassonde stromaufwärtigen Teils des Dreiwegekatalysators 21 mit Sauerstoff beladen, bis er gesättigt ist.

In einem Schritt S5 wird ein vorgegebenen erstes
Luft/Kraftstoff-Verhältnis LAM1_SP in den Brennräumen der Zylinder Z1 bis Z4 vorgegeben und bevorzugt mittels Beeinflussen der zuzumessenden Kraftstoffmenge eingestellt. Das erste vorgegeben Luft/Kraftstoff-Verhältnis LAM1_SP ist so vorgegeben, dass es im Vergleich zu einem stöchiometrischen Luft/Kraftstoff-Verhältnis einen erhöhten Kraftstoffanteil hat.

Ein Schritt S7 wird abgearbeitet, nachdem das vorgegebene erste Luft/Kraftstoff-Verhältnis LAM1_SP vorgegeben worden ist, also zu einem Zeitpunkt, in dem noch nicht notwendigerweise tatsächlich ein entsprechendes Luft/KraftstoffVerhältnis eingestellt ist. In dem Schritt S7 wird geprüft, ob stromaufwärts des Dreiwegekatalysators 21 das vorgegebene erste Luft/Kraftstoff-Verhältnis LAM1_SP in den Brennräumen der Zylinder Z1 bis Z4 kleiner ist als ein vorgegebener Schwellenwert LAM_THD. In diesem Schritt wird somit auch berücksichtigt, dass das vorgegebene erste Luft/KraftstoffVerhältnis LAM1_SP sich abhängig von Gaslaufzeiten erst mit einer gewissen Verzögerung im Bereich des Abgastraktes eingangsseitig des Dreiwegekatalysators 21 einstellt. Dies kann beispielsweise durch eine entsprechende Modellierung der Gaslaufzeiten berücksichtigt werden.

Der Schwellenwert LAM_THD entspricht bevorzugt dem stöchiometrischen Luft/Kraftstoff-Verhältnis. Der Schwellenwert LAM_THD ist bevorzugt deswegen so gewählt, da mit dem Unterschreiten des stöchiometrischen Luft/Kraftstoff-Verhältnisses ein Entladen des in dem Dreiwegekatalysator 21 gespeicherten Sauerstoffs beginnt.

Ist die Bedingung des Schrittes S7 nicht erfüllt, so wird die Bearbeitung in einem Schritt S9 fortgesetzt, in dem das Programm für eine vorgebbare Zeitdauer oder einen vorgebbaren Kurbelwellenwinkel verharrt, bevor die Bearbeitung erneut in dem Schritt S7 fortgesetzt wird. Die Zeitdauer, in der das Programm in dem Schritt S9 verharrt, ist geeignet kurzgewählt und zwar derart, dass Änderungen des in dem Schritt S7 überprüften vorgegebenen ersten Luft/Kraftstoff-Verhältnisses LAM1_SP sehr zeitnah und mit hoher Präzision überprüft werden können.

Ist die Bedingung des Schrittes S7 hingegen erfüllt, so wird in einem Schritt S11 einem ersten Sauerstoffspeicherkapazitätswert OSC1 ein Term hinzuaddiert, der das Integral eines Luftmassenstroms MAF in die Zylinder Z1 bis Z4 multipliziert mit eins minus dem Kehrwert des vorgegebenen ersten Luft/Kraftstoff-Verhältnisses LAM1_SP ist. In diesem Zusammenhang werden bei dem vorgegebene ersten Luft/KraftstoffVerhältnis LAM1_SP ebenso wie in dem Schritt S7 die Gaslaufzeiten entsprechend berücksichtigt.

Der Term wird zusätzlich multipliziert mit einem Sauerstofffaktor 02_FAC, der den Anteil des Sauerstoffs in dem Luftmassenstrom MAF repräsentiert. Der Sauerstofffaktor 02_FAC hat beispielsweise den Wert 0,23. Das Integrieren erfolgt über die Zeitdauer seit der letzten Abarbeitung des Schrittes S11 bei dem aktuellen Programmdurchlauf.

Alternativ kann die Bearbeitung nach dem Schritt S5 jedoch auch direkt in dem Schritt S11 fortgesetzt werden.

In einem Schritt S13 wird geprüft, ob das durch die Abgassonde 43 erfasste Luft/Kraftstoff-Verhältnis LAM_MEAS kleiner ist als der Schwellenwert LAM_THD. Ist dies nicht der Fall, so wird die Bearbeitung in dem Schritt S11 erneut fortgesetzt.

Ist die Bedingung des Schrittes S13 hingegen erfüllt, so wird - gegebenenfalls nach einer gewissen Zeitdauer - in einem Schritt S15 der Dreiwegekatalysator 21 erneut mit Sauerstoff beladen, bis zumindest der bezüglich der Abgassonde 43 stromaufwärtige Teil des Dreiwegekatalysators 21 gesättigt ist.

Anschließend wird dann in einem Schritt S18 ein vorgegebenes zweites Luft/Kraftstoff-Verhältnis LAM2_SP in den Brennräumen der Zylinder Z1 bis Z4 vorgegeben und eingestellt. Das vorgegebene zweite Luft/Kraftstoff-Verhältnis LAM2_SP unterscheidet sich von dem vorgegebenen ersten Luft/KraftstoffVerhältnis LAM1_SP. Es kann beispielsweise einen Luftverhältniswert von 0,9 aufweisen und beispielsweise das vorgegebene erste Luft/Kraftstoff-Verhältnis LAM1_SP einen Luftverhältniswert von beispielsweise 0,8 aufweisen. Bevorzugt aber nicht notwendigerweise liegen die Werte in Hinblick auf das Luftverhältnis der vorgegebenen ersten und zweiten Luft/Kraftstoff-Verhältnisse in etwa in einem Bereich von 0,7 bis 0,9.

Anschließend wird die Bearbeitung in einem Schritt S20 analog zu dem Schritt S7 fortgesetzt. Ist die Bedingung des Schrittes S20 nicht erfüllt so wird die Bearbeitung nach einem Verharren in einem Schritt S22, der dem Schritt S9 entspricht, erneut in dem Schritt S20 fortgesetzt. Ist die Bedingung des Schrittes S20 hingegen erfüllt, so wird in einem Schritt S24 zu dem zweiten Sauerstoffspeicherkapazitätswert OSC2 der entsprechende Term wie in dem Schritt S11 hinzuaddiert. Alternativ kann entsprechend auch nach dem Schritt S18 die Bearbeitung direkt in dem Schritt S24 fortgesetzt werden.

In einem Schritt S26 wird analog zu dem Schritt S13 geprüft, ob das durch die Abgassonde 43 erfasste Luft/KraftstoffVerhältnis LAM_MEAS kleiner ist als der vorgegebene Schwellenwert LAM_THD. Ist die Bedingung des Schrittes S26 nicht erfüllt, so wird die Bearbeitung erneut in dem Schritt S24 fortgesetzt. Ist die Bedingung des Schrittes S26 hingegen erfüllt, so ist in dem Dreiwegekatalysator 21 stromaufwärts der Abgassonde 43 kein Sauerstoff mehr gebunden.

In einem Schritt S28 wird anschließend ein Korrekturwert COR abhängig von einer Differenz des ersten und zweiten Sauerstoffspeicherkapazitätswertes OSC1, OSC2 ermittelt.

Anschließend wird in einem Schritt S30 ein korrigierter Sauerstoffspeicherkapazitätswert OSC_COR ermittelt und zwar durch ein Multiplizieren des zweiten Sauerstoffspeicherkapazitätswertes OSC2 mit dem Korrekturwert COR. Anschließend wird das Programm in einem Schritt S32 beendet.

Mittels des korrigierten Sauerstoffspeicherkapazitätswertes OSC_COR kann dann beispielsweise eine Diagnose des Dreiwegekatalysators durchgeführt werden. Bevorzugt werden die Schritte S5 bis S13 und S18 bis S28 durchgeführt während einer Regenerationsphase des NOX-Speicherkatalysators. Im Falle eines Nicht-Vorhandenseins des NOX-Speicherkatalysators werden die entsprechenden Schritte bevorzugt während einer so genannten Ausräumphase (Purge-Phase) des Dreiwegekatalysators 21 durchgeführt. Die Ausräumphase schließt sich beispielsweise an einen Schubbetrieb der Brennkraftmaschine ohne Zumessung von Kraftstoff an.

Mittels des korrigierten Sauerstoffspeicherkapazitätswertes OSC_COR kann eine Diagnose des Dreiwegekatalysators 21 durchgeführt werden. Dies kann beispielsweise dadurch erfolgen, dass überprüft wird, ob der korrigierte Sauerstoffspeicherkapazitätswert OSC_COR in einem vorgebbaren Wertebereich liegt. Das Vorgehen entsprechend Schritt S5 bis S13 und S18 bis S28 kann auch als Durchbruchmethode bezeichnet werden.

Der Korrekturwert COR kann in dem Schritt S28 beispielsweise aus einem Kennfeld, wobei unter einem Kennfeld auch eine so genannte Kennlinie verstanden werden kann, abhängig von der Differenz des ersten und zweiten Sauerstoffspeicherkapazitätswertes ermittelt werden. Das Kennfeld kann einfach durch Versuche, beispielsweise an einem Motorprüfstand, oder durch geeignete Simulationen ermittelt werden und ist in einem Datenspeicher der Steuervorrichtung 25 gespeichert.

Alternativ kann der Korrekturwert in dem Schritt S28 auch mittels einer abschnittsweisen linearen Funktion abhängig von der Differenz des ersten und zweiten Sauerstoffspeicherkapazitätswertes OSC1, OSC2 ermittelt werden. Die abschnittsweise lineare Funktion hat bevorzugt zwei lineare Abschnitte, deren Steigungen abhängen von dem Vorzeichen der Differenz des ersten und zweiten Sauerstoffspeicherkapazitätswertes OSC1, OSC2. Die jeweiligen Steigungen und Geraden-Abschnitte können ebenso mittels geeigneter Versuche, zum Beispiel an dem Motorprüfstand, oder durch geeignete Simulationen ermittelt sein und in dem Datenspeicher der Steuervorrichtung 25 gespeichert sein.

Der Korrekturwert COR kann auch, wie in einem Schritt S38 angegeben, abhängig von der Differenz des ersten und zweiten Sauerstoffspeicherkapazitätswertes OSC1, OSC2, den vorgegebenen ersten und zweiten Luft/Kraftstoff-Verhältnissen LAM1_SP, LAM2_SP und einem vorgegebenen dritten Luft/KraftstoffVerhältnis LAM3_SP in den Brennräumen der Zylinder Z1 bis Z4 ermittelt werden. Das vorgegebene dritte Luft/KraftstoffVerhältnis LAM3_SP ist weniger fett als das erste und das zweite vorgegebene Luft/Kraftstoff-Verhältnis und ist bevorzugt nahezu das stöchiometrische Luft/Kraftstoff-Verhältnis. Es kann beispielsweise in Bezug auf die Luftzahl einen Wert von 0,9999 haben.

Das Berechnen des Korrekturwertes COR erfolgt in dem Schritt S38 bevorzugt mittels der dort angegebenen Formel. Durch die geeignete Wahl des vorgegebenen dritten Luft/Kraftstoff-Verhältnisses LAM3_SP kann so der Korrekturwert COR sehr präzise ermittelt werden. Falls das Berechnen des Korrekturwertes COR entsprechend des Schrittes S38 erfolgt, wird der korrigierte Sauerstoffspeicherkapazitätswert OSC_COR in dem Schritt S36 bevorzugt durch Bilden einer Differenz des zweiten Sauerstoffspeicherkapazitätswertes OSC2 und des Korrekturwertes ermittelt.

Alternativ oder auch zusätzlich zu den Schritten S28 und S30 oder S38 und S36 kann auch ein Schritt S34 vorgesehen sein, in dem die Dynamik-Zeitdauer DELTA_T abhängig von der Differenz des ersten und zweiten Sauerstoffspeicherkapazitätswertes OSC1, OSC2, dem Luftmassenstrom MAF, dem Sauerstofffaktor 02_FAC und den vorgegebenen ersten und zweiten Luft/Kraftstoff-Verhältnissen LAM1_SP, LAM2_SP ermittelt wird und zwar bevorzugt entsprechend der in dem Schritt S34 angegebenen Formel.

Die Dynamik-Zeitdauer DELTA_T repräsentiert Änderungen der Ansprechzeitdauer der Abgassonde 43 im Vergleich zu dem Neuzustand der Abgassonde 43 und kann so beispielsweise zur Diagnose der Abgassondendynamik herangezogen werden. Insbesondere kann dies erfolgen durch ein Überprüfen, ob die Dynamik-Zeitdauer DELTA_T einen vorgebbaren Wertebereich über- oder unterschreitet.

Bevorzugt ist das zweite vorgegebene Luft/KraftstoffVerhältnis LAM2_SP weniger fett als das vorgegebene erste Luft/Kraftstoff-Verhältnis LAM1_SP. ES kann jedoch auch umgedreht sein, mit der Folge, dass gegebenenfalls das Vorzeichen des Korrekturwertes COR angepasst sein muss.

Das Programm gemäß der Figur 2 kann in alternativer Ausgestaltung auch so ausgebildet sein, dass in den Schritten S3 und S15 jeweils der in dem Dreiwegekatalysator 21 gespeicherte Sauerstoff ganz entladen wird und zwar zumindest in dem Teil, der sich stromaufwärts der Abgassonde 43 befindet. Die in den Schritten S9 und S18 vorgegebenen ersten und zweiten Luft/Kraftstoff-Verhältnisse LAM1_SP, LAM2_SP sind dann entsprechend mager gewählt, wobei dann bevorzugt das vorgegebenen erste Luft/Kraftstoff-Verhältnis LAM1_SP magerer ist als das vorgegebene zweite Luft/Kraftstoff-Verhältnis LAM2_SP. In den Bedingungen der Schritte S5, S13, S20 und S26 ist dann das Kleiner-Zeichen ersetzt durch ein Größer-Zeichen.

In den Figuren 3 und 4 sind jeweils die Messsignale MS der Abgassonde 43 und ein dem ersten bzw. zweiten vorgegebenen Luft/Kraftstoff-Verhältnis entsprechendes Luftverhältnis L1 dargestellt. Die gestrichelte Linie stellt das stöchiometrische Luftverhältnis dar. Die Fläche des Rechtecks, das mit 52 bezeichnet ist ist repräsentativ für den ersten Sauerstoffspeicherkapazitätswert OSC1. Die Fläche in Figur 4, die mit dem Bezugszeichen 54 versehen ist ist repräsentativ für den zweiten Sauerstoffspeicherkapazitätswert OSC2. Die Teilflächen 56 und 58 haben den gleichen Flächeninhalt und entsprechen dem wahren Sauerstoffspeicherkapazitätswert. Die Teilflächen 58 und 60 erstrecken sich über die Dynamik-Zeitdauer DELTA_T und ihr Flächeninhalt hängt somit von dem jeweiligen vorgegebenen ersten beziehungsweise zweiten Luft/KraftstoffVerhältnis LAM1_SP, LAM2_SP ab. Je näher das jeweilige vorgegebene Luft/Kraftstoff-Verhältnis an dem stöchiometrischen Luft/Kraftstoff-Verhältnis liegt, desto geringer ist der Gesamtanteil der Teilflächen an der jeweiligen Gesamtfläche.

## Patentansprüche

1. Verfahren zum Ermitteln einer Sauerstoffspeicherkapazität eines Abgaskatalysators einer Brennkraftmaschine mit mindestens einem Zylinder (Z1-Z4) und einem Abgastrakt (4), in dem der Abgaskatalysator und eine Abgassonde (43) stromabwärts zumindest eines Teils des Abgaskatalysators angeordnet sind, bei dem
- der bezüglich der Abgassonde (43) stromaufwärtige Teil des Abgaskatalysators mit Sauerstoff beladen wird, bis er gesättigt ist,
- ein vorgegebenes erstes fettes Luft/Kraftstoff-Verhältnis (LAM1_SP) in dem Brennraum des Zylinders (Z1 bis Z4) eingestellt wird,
- ein erster Sauerstoffspeicherkapazitätswert (OSC1) ermittelt wird abhängig von dem Messsignal (MS) der Abgassonde (43) und dem vorgegebenen ersten fetten Luft/KraftstoffVerhältnis (LAM1_SP),
- der bezüglich der Abgassonde (43) stromaufwärtige Teil des Abgaskatalysators mit Sauerstoff beladen wird, bis er gesättigt ist,
- ein vorgegebenes zweites fettes Luft/Kraftstoff-Verhältnis (LAM2_SP) in dem Brennraum des Zylinders eingestellt wird,
- ein zweiter Sauerstoffspeicherkapazitätswert (OSC2) ermittelt wird abhängig von dem Messsignal (MS) der Abgassonde (43) und dem vorgegebenen zweiten fetten Luft/KraftstoffVerhältnis (LAM2_SP) und
- ein korrigierter Sauerstoffspeicherkapazitätswert (OSC_COR) abhängig von den ersten und zweiten Sauerstoffspeicherkapazitätswerten (OSC1, OSC2) ermittelt wird.

2. Verfahren zum Ermitteln einer Sauerstoffspeicherkapazität eines Abgaskatalysators einer Brennkraftmaschine mit mindestens einem Zylinder (Z1-Z4) und einem Abgastrakt (4), in dem der Abgaskatalysator und eine Abgassonde (43) stromabwärts zumindest eines Teils des Abgaskatalysators angeordnet sind, bei dem
- der bezüglich der Abgassonde (43) in dem stromaufwärtigen Teil des Abgaskatalysators gespeicherte Sauerstoff ganz entladen wird,
- ein vorgegebenes erstes mageres Luft/Kraftstoff-Verhältnis (LAM1_SP) in dem Brennraum des Zylinders (Z1 bis Z4) eingestellt wird,
- ein erster Sauerstoffspeicherkapazitätswert (OSC1) ermittelt wird abhängig von dem Messsignal (MS) der Abgassonde (43) und dem vorgegebenen ersten mageren Luft/KraftstoffVerhältnis (LAM1_SP),
- der bezüglich der Abgassonde (43) in dem stromaufwärtigen Teil des Abgaskatalysators gespeicherte Sauerstoff ganz entladen wird,
- ein vorgegebenes zweites mageres Luft/Kraftstoff-Verhältnis (LAM2_SP) in den Brennraum des Zylinders (Z1 bis Z4) eingestellt wird,
- ein zweiter Sauerstoffspeicherkapazitätswert (OSC2) ermittelt wird abhängig von dem Messsignal (MS) der Abgassonde (43) und dem vorgegebenen zweiten mageren Luft/KraftstoffVerhältnis (LAM2_SP) und
- ein korrigierter Sauerstoffspeicherkapazitätswert (OSC_COR) abhängig von den ersten und zweiten Sauerstoffspeicherkapazitätswerten (OSC1, OSC2) ermittelt wird.

3. Verfahren nach Anspruch 1 oder 2, bei dem
- ein Korrekturwert (COR) abhängig von einer Differenz des ersten und zweiten Sauerstoffspeicherkapazitätswertes (OSC1, OSC2) ermittelt wird und
- der korrigierte Sauerstoffspeicherkapazitätswert (OSC_COR) abhängig von dem zweiten Sauerstoffspeicherkapazitätswert (OSC2) und dem Korrekturwert (COR) ermittelt wird.

4. Verfahren nach Anspruch 3, bei dem der Korrekturwert (COR) aus einem Kennfeld abhängig von der Differenz des ersten und zweiten Sauerstoffspeicherkapazitätswertes (OSC1, OSC2) ermittelt wird.

5. Verfahren nach Anspruch 3, bei dem der Korrekturwert (COR) mittels einer abschnittsweisen linearen Funktion abhängig von der Differenz des ersten und zweiten Sauerstoffspeicherkapazitätswertes (OSC1, OSC2) ermittelt wird.

6. Verfahren nach Anspruch 3, bei dem der Korrekturwert (COR) abhängig von dem ersten, zweiten und einem dritten fetten beziehungsweise mageren Luft/Kraftstoff-Verhältnis (LAM3_SP) ermittelt wird, wobei das dritte fette beziehungsweise magere Luft/Kraftstoff-Verhältnis weniger fett beziehungsweise weniger mager ist als das erste oder zweite.

7. Verfahren nach Anspruch 6, bei dem der Korrekturwert (COR) abhängig von einer Differenz des dritten und des zweiten Luft/Kraftstoff-Verhältnisses (LAM3_SP, LAM2_SP) dividiert durch eine Differenz des ersten und des zweiten Luft/Kraftstoff-Verhältnisses (LAM1_SP, LAM2_SP) ermittelt wird.

8. Verfahren nach einem der vorstehenden Ansprüche, bei dem eine Dynamik-Zeitdauer (DELTA_T) ermittelt wird abhängig von der Differenz des ersten und zweiten Sauerstoffspeicherkapazitätswertes (OSC1, OSC2) und dem ersten und zweiten Luft/Kraftstoff-Verhältnis (LAM1_SP, LAM2_SP), und der korrigierte Sauerstoffspeicherkapazitätswert (OSC_COR) abhängig von der Dynamik-Zeitdauer (DELTA_T) ermittelt wird.

9. Verfahren nach einem der vorstehenden Ansprüche, bei dem eine Diagnose des Abgaskatalysators erfolgt abhängig von dem korrigierten Sauerstoffspeicherkapazitätswert (OSC_COR).

10. Verfahren zum Ermitteln einer Dynamik-Zeitdauer einer Abgassonde einer Brennkraftmaschine mit mindestens einem Zylinder (Z1) und einem Abgastrakt (4), in dem der Abgaskatalysator und die Abgassonde (43) stromabwärts zumindest eines Teils des Abgaskatalysators angeordnet sind, bei dem
- der bezüglich der Abgassonde (43) stromaufwärtige Teil des Abgaskatalysators mit Sauerstoff beladen wird, bis er gesättigt ist,
- ein vorgegebenes erstes fettes Luft/Kraftstoff-Verhältnis (LAM1_SP) in dem Brennraum des Zylinders (Z1 bis Z4) eingestellt wird,
- ein erster Sauerstoffspeicherkapazitätswert (OSC1) ermittelt wird abhängig von dem Messsignal (MS) der Abgassonde (43) und dem vorgegebenen ersten fetten Luft/KraftstoffVerhältnis (LAM1_SP),
- der bezüglich der Abgassonde (43) stromaufwärtige Teil des Abgaskatalysators mit Sauerstoff beladen wird, bis er gesättigt ist,
- ein vorgegebenes zweites fettes Luft/Kraftstoff-Verhältnis (LAM2_SP) in dem Brennraum des Zylinders eingestellt wird,
- ein zweiter Sauerstoffspeicherkapazitätswert (OSC2) ermittelt wird abhängig von dem Messsignal (MS) der Abgassonde (43) und dem vorgegebenen ersten fetten Luft/KraftstoffVerhältnis (LAM1_SP) und
- die Dynamik-Zeitdauer (T_DELTA) abhängig von den ersten und zweiten Sauerstoffspeicherkapazitätswerten (OSC1, OSC2) ermittelt wird.

11. Verfahren zum Ermitteln einer Dynamik-Zeitdauer einer Abgassonde einer Brennkraftmaschine mit mindestens einem Zylinder (Z1) und einem Abgastrakt (4), in dem der Abgaskatalysator und die Abgassonde (43) stromabwärts zumindest eines Teils des Abgaskatalysators angeordnet sind, bei dem
- der bezüglich der Abgassonde (43) in dem stromaufwärtigen Teil des Abgaskatalysators gespeicherte Sauerstoff ganz entladen wird,
- ein vorgegebenes erstes mageres Luft/Kraftstoff-Verhältnis (LAM1_SP) in dem Brennraum des Zylinders (Z1 bis Z4) eingestellt wird,
- ein erster Sauerstoffspeicherkapazitätswert (OSC1) ermittelt wird abhängig von dem Messsignal (MS) der Abgassonde (43) und dem vorgegebenen ersten mageren Luft/KraftstoffVerhältnis (LAM1_SP),
- der bezüglich der Abgassonde (43) in dem stromaufwärtigen Teil des Abgaskatalysators gespeicherte Sauerstoff ganz entladen wird,
- ein vorgegebenes zweites mageres Luft/Kraftstoff-Verhältnis (LAM2_SP) in den Brennraum des Zylinders (Z1 bis Z4) eingestellt wird,
- ein zweiter Sauerstoffspeicherkapazitätswert (OSC2) ermittelt wird abhängig von dem Messsignal (MS) der Abgassonde (43) und dem vorgegebenen zweiten mageren Luft/KraftstoffVerhältnis (LAM2_SP) und
- die Dynamik-Zeitdauer (T_DELTA) abhängig von den ersten und zweiten Sauerstoffspeicherkapazitätswerten (OSC1, OSC2) ermittelt wird.

12. Verfahren nach Anspruch 10 oder 11, bei dem abhängig von der Dynamik-Zeitdauer (DELTA_T) eine Diagnose der Abgassonde (43) erfolgt.

13. Vorrichtung zum Ermitteln einer Sauerstoffspeicherkapazität eines Abgaskatalysators einer Brennkraftmaschine mit mindestens einem Zylinder (Z1-Z4) und einem Abgastrakt (4), in dem der Abgaskatalysator und eine Abgassonde (43) stromabwärts zumindest eines Teils des Abgaskatalysators angeordnet sind, wobei die Vorrichtung ausgebildet ist zum
- Beladen des bezüglich der Abgassonde (43) stromaufwärtigen Teils des Abgaskatalysators mit Sauerstoff, bis er gesättigt ist,
- Einstellen eines vorgegebenen ersten fetten
Luft/Kraftstoff-Verhältnisses (LAM1_SP) in dem Brennraum des Zylinders (Z1 bis Z4),
- Ermitteln eines ersten Sauerstoffspeicherkapazitätswertes (OSC1) abhängig von dem Messsignal (MS) der Abgassonde (43) und dem vorgegebenen ersten fetten Luft/Kraftstoff-Verhältnis (LAM1_SP),
- Beladen des bezüglich der Abgassonde (43) stromaufwärtigen Teils des Abgaskatalysators mit Sauerstoff, bis er gesättigt ist,
- Einstellen eines vorgegebenen zweiten fetten
Luft/Kraftstoff-Verhältnisses (LAM2_SP) in dem Brennraum des Zylinders,
- Ermitteln eines zweiten Sauerstoffspeicherkapazitätswertes (OSC2) abhängig von dem Messsignal (MS) der Abgassonde (43) und dem vorgegebenen zweiten fetten Luft/KraftstoffVerhältnis (LAM2_SP) und
- Ermitteln eines korrigierten Sauerstoffspeicherkapazitätswertes (OSC_COR) abhängig von den ersten und zweiten Sauerstoffspeicherkapazitätswerten (OSC1, OSC2).

14. Vorrichtung zum Ermitteln einer Sauerstoffspeicherkapazität eines Abgaskatalysators einer Brennkraftmaschine mit mindestens einem Zylinder (Z1-Z4) und einem Abgastrakt (4), in dem der Abgaskatalysator und eine Abgassonde (43) stromabwärts zumindest eines Teils des Abgaskatalysators angeordnet sind, wobei die Vorrichtung ausgebildet ist zum
- ganz Entladen des bezüglich der Abgassonde (43) in dem stromaufwärtigen Teil des Abgaskatalysators gespeicherten Sauerstoff,
- Einstellen eines vorgegebenen ersten mageren Luft/Kraftstoff-Verhältnisses (LAM1_SP) in dem Brennraum des Zylinders (Z1 bis Z4),
- Ermitteln eines ersten Sauerstoffspeicherkapazitätswertes (OSC1) abhängig von dem Messsignal (MS) der Abgassonde (43) und dem vorgegebenen ersten mageren Luft/KraftstoffVerhältnis (LAM1_SP),
- ganz Entladen des bezüglich der Abgassonde (43) in dem stromaufwärtigen Teil des Abgaskatalysators gespeicherten Sauerstoffs,
- Einstellen eines vorgegebenen zweiten mageren Luft/Kraftstoff-Verhältnisses (LAM2_SP) in den Brennraum des Zylinders (Z1 bis Z4),
- Ermitteln eines zweiten Sauerstoffspeicherkapazitätswertes (OSC2) abhängig von dem Messsignal (MS) der Abgassonde (43) und dem vorgegebenen zweiten mageren Luft/KraftstoffVerhältnis (LAM2_SP) und
- Ermitteln eines korrigierten Sauerstoffspeicherkapazitätswertes (OSC_COR) abhängig von den ersten und zweiten Sauerstoffspeicherkapazitätswerten (OSC1, OSC2).

15. Vorrichtung zum Ermitteln einer Dynamik-Zeitdauer einer Abgassonde einer Brennkraftmaschine mit mindestens einem Zylinder (Z1) und einem Abgastrakt (4), in dem der Abgaskatalysator und die Abgassonde (43) stromabwärts zumindest eines Teils des Abgaskatalysators angeordnet sind, wobei die Vorrichtung ausgebildet ist zum
- Beladen des bezüglich der Abgassonde (43) stromaufwärtigen Teils des Abgaskatalysators mit Sauerstoff, bis er gesättigt ist,
- Einstellen eines vorgegebenen ersten fetten Luft/Kraftstoff-Verhältnisses (LAM1_SP) in dem Brennraum des Zylinders (Z1 bis Z4),
- Ermitteln eines ersten Sauerstoffspeicherkapazitätswertes (OSC1) abhängig von dem Messsignal (MS) der Abgassonde (43) und dem vorgegebenen ersten fetten Luft/Kraftstoff-Verhältnis (LAM1_SP),
- Beladen des bezüglich der Abgassonde (43) stromaufwärtigen Teils des Abgaskatalysators mit Sauerstoff, bis er gesättigt ist,
- Einstellen eines vorgegebenen zweiten fetten
Luft/Kraftstoff-Verhältnisses (LAM2_SP) in dem Brennraum des Zylinders,
- Ermitteln eines zweiten Sauerstoffspeicherkapazitätswertes (OSC2) abhängig von dem Messsignal (MS) der Abgassonde (43) und dem vorgegebenen ersten fetten Luft/Kraftstoff-Verhältnis (LAM1_SP) und
- Ermitteln der Dynamik-Zeitdauer (T_DELTA) abhängig von den ersten und zweiten Sauerstoffspeicherkapazitätswerten (OSC1, OSC2).

16. Vorrichtung zum Ermitteln einer Dynamik-Zeitdauer einer Abgassonde einer Brennkraftmaschine mit mindestens einem Zylinder (Z1) und einem Abgastrakt (4), in dem der Abgaskatalysator und die Abgassonde (43) stromabwärts zumindest eines Teils des Abgaskatalysators angeordnet sind, wobei die Vorrichtung ausgebildet ist zum
- ganz Entladen des bezüglich der Abgassonde (43) in dem stromaufwärtigen Teil des Abgaskatalysators gespeicherten Sauerstoffs,
- Einstellen eines vorgegebenen ersten mageren Luft/Kraftstoff-Verhältnisses (LAM1_SP) in dem Brennraum des Zylinders (Z1 bis Z4),
- Ermitteln eines ersten Sauerstoffspeicherkapazitätswertes (OSC1) abhängig von dem Messsignal (MS) der Abgassonde (43) und dem vorgegebenen ersten mageren Luft/KraftstoffVerhältnis (LAM1_SP),
- ganz Entladen des bezüglich der Abgassonde (43) in dem stromaufwärtigen Teil des Abgaskatalysators gespeicherten Sauerstoffs,
- Einstellen eines vorgegebenen zweiten mageren
Luft/Kraftstoff-Verhältnisses (LAM2_SP) in dem Brennraum des Zylinders (Z1 bis Z4),
- Ermitteln eines zweiten Sauerstoffspeicherkapazitätswertes: (OSC2) abhängig von dem Messsignal (MS) der Abgassonde (43) und dem vorgegebenen zweiten mageren Luft/KraftstoffVerhältnis (LAM2_SP) und
- Ermitteln der Dynamik-Zeitdauer (T_DELTA) abhängig von den ersten und zweiten Sauerstoffspeicherkapazitätswerten (OSC1, OSC2).

## Claims

1. Method for determining an oxygen storage capacity of a catalytic converter of an internal combustion engine having at least one cylinder (Z1-Z4) and an exhaust tract (4) in which are disposed the catalytic converter and an exhaust probe (43) downstream of at least part of said catalytic converter, wherein
- the part of the catalytic converter upstream of the exhaust probe (43) is oxygenated until it is saturated,
- a predefined first rich air/fuel ratio (LAM1_SP) is set in the combustion chamber of the cylinder (Z1 to Z4),
- a first oxygen storage capacity value (OSC1) is determined as a function of the measurement signal (MS) of the exhaust probe (43) and the predefined first rich air/fuel ratio (LAM1_SP),
- the part of the catalytic converter upstream of the exhaust probe (43) is oxygenated until it is saturated,
- a predefined second rich air/fuel ratio (LAM2_SP) is set in the combustion chamber of the cylinder,
- a second oxygen storage capacity value (OSC2) is determined as a function of the measurement signal (MS) of the exhaust probe (43) and the predefined second rich air/fuel ratio (LAM2_SP) and
- a corrected oxygen storage capacity value (OSC_COR) is determined as a function of the first and second oxygen storage capacity values (OSC1, OSC2).

2. Method for determining an oxygen storage capacity of a catalytic converter of an internal combustion engine having at least one cylinder (Z1-Z4) and an exhaust tract (4) in which are disposed the catalytic converter and an exhaust probe (43) downstream of at least part of said catalytic converter, wherein
- the oxygen stored in the part of the catalytic converter upstream of the exhaust probe (43) is completely discharged,
- a predefined first lean air/fuel ratio (LAM1_SP) is set in the combustion chamber of the cylinder (Z1 to Z4),
- a first oxygen storage capacity value (OSC1) is determined as a function of the measurement signal (MS) of the exhaust probe (43) and the predefined first lean air/fuel ratio (LAM1_SP),
- the oxygen stored in the part of the catalytic converter upstream of the exhaust probe (43) is completely discharged,
- a predefined second lean air/fuel ratio (LAM2_SP) is set in the combustion chamber of the cylinder (Z1 to Z4),
- a second oxygen storage capacity value (OSC2) is determined as a function of the measurement signal (MS) of the exhaust probe (43) and the predefined second lean air/fuel ratio (LAM2_SP) and
- a corrected oxygen storage capacity value (OSC_COR) is determined as a function of the first and second oxygen storage capacity values (OSC1, OSC2).

3. Method according to claim 1 or 2, wherein
- a correction value (COR) is determined as a function of the difference between the first and second oxygen storage capacity value (OSC1, OSC2) and
- a corrected oxygen storage capacity value (OSC_COR) is determined as a function of the second oxygen storage capacity value (OSC2) and the correction value (COR).

4. Method according to claim 3, wherein the correction value (COR) is determined from an engine map as a function of the difference between the first and second oxygen storage capacity value (OSC1, OSC2).

5. Method according to claim 3, wherein the correction value (COR) is determined as a function of the difference between the first and second oxygen storage capacity value (OSC1, OSC2) by means of a piecewise linear function.

6. Method according to claim 3, wherein the correction value (COR) is determined as a function of the first, second and a third rich or lean air/fuel ratio (LAM3_SP), the third rich or lean air/fuel ratio being less rich or less lean than the first or second.

7. Method according to claim 6, wherein the correction value (COR) is determined as a function of the difference between the third and second air/fuel ratio (LAM3_SP, LAM2_SP) divided by the difference between the first and second air/fuel ratio (LAM1_SP, LAM2_SP).

8. Method according to one of the preceding claims, wherein a dynamic time duration (DELTA_T) is determined as a function of the difference between the first and second oxygen storage capacity value (OSC1, OSC2) and the first and second air/fuel ratio (LAM1_SP, LAM2_SP), and the corrected oxygen storage capacity value (OSC_COR) is determined as a function of the dynamic time duration (DELTA T).

9. Method according to one of the preceding claims, wherein catalytic converter diagnostics are performed on the basis of the corrected oxygen storage capacity value (OSC_COR).

10. Method for determining a dynamic time duration of an exhaust probe of an internal combustion engine having at least one cylinder (Z1) and an exhaust tract (4) in which are disposed the catalytic converter and the exhaust probe (43) downstream of at least part of said catalytic converter, wherein
- the part of the catalytic converter upstream of the exhaust probe (43) is oxygenated until it is saturated,
- a predefined first rich air/fuel ratio (LAM1_SP) is set in the combustion chamber of the cylinder (Z1 to Z4),
- a first oxygen storage capacity value (OSC1) is determined as a function of the measurement signal (MS) of the exhaust probe (43) and the predefined first rich air/fuel ratio (LAM1_SP),
- the part of the catalytic converter upstream of the exhaust probe (43) is oxygenated until it is saturated,
- a predefined second rich air/fuel ratio (LAM2_SP) is set in the combustion chamber of the cylinder,
- a second oxygen storage capacity value (OSC2) is determined as a function of the measurement signal (MS) of the exhaust probe (43) and the predefined first rich air/fuel ratio (LAM1_SP) and
- a dynamic time duration (T_DELTA) is determined as a function of the first and second oxygen storage capacity values (OSC1, OSC2).

11. Method for determining a dynamic time duration of an exhaust probe of an internal combustion engine having at least one cylinder (Z1) and an exhaust tract (4) in which are disposed the catalytic converter and the exhaust probe (43) downstream of at least part of said catalytic converter, wherein
- the oxygen stored in the part of the catalytic converter upstream of the exhaust probe (43) is completely discharged,
- a predefined first lean air/fuel ratio (LAM1_SP) is set in the combustion chamber of the cylinder (Z1 to Z4),
- a first oxygen storage capacity value (OSC1) is determined as a function of the measurement signal (MS) of the exhaust probe (43) and the predefined first lean air/fuel ratio (LAM1_SP),
- the oxygen stored in the part of the catalytic converter upstream of the exhaust probe (43) is completely discharged,
- a predefined second lean air/fuel ratio (LAM2_SP) is set in the combustion chamber of the cylinder (Z1 to Z4),
- a second oxygen storage capacity value (OSC2) is determined as a function of the measurement signal (MS) of the exhaust probe (43) and the predefined second lean air/fuel ratio (LAM2_SP) and
- the dynamic time duration (T_DELTA) is determined as a function of the first and second oxygen storage capacity values (OSC1, OSC2).

12. Method according to claim 10 or 11, wherein diagnostics of the exhaust probe (43) are performed on the basis of the dynamic time duration (DELTA T).

13. Device for determining an oxygen storage capacity of a catalytic converter of an internal combustion engine having at least one cylinder (Z1-Z4) and an exhaust tract (4) in which are disposed the catalytic converter and an exhaust probe (43) downstream of at least part of said catalytic converter, the device being designed to
- oxygenate the part of the catalytic converter upstream of the exhaust probe (43) until it is saturated,
- set a predefined first rich air/fuel ratio (LAM1_SP) in the combustion chamber of the cylinder (Z1 to Z4),
- determine a first oxygen storage capacity value (OSC1) as a function of the measurement signal (MS) of the exhaust probe (43) and the predefined first rich air/fuel ratio (LAM1_SP),
- oxygenate the part of the catalytic converter upstream of the exhaust probe (43) until it is saturated,
- set a predefined second rich air/fuel ratio (LAM2_SP) in the combustion chamber of the cylinder,
- determine a second oxygen storage capacity value (OSC2) as a function of the measurement signal (MS) of the exhaust probe (43) and the predefined second rich air/fuel ratio (LAM2_SP) and
- determine a corrected oxygen storage capacity value (OSC_COR) as a function of the first and second oxygen storage capacity values (OSC1, OSC2).

14. Device for determining an oxygen storage capacity of a catalytic converter of an internal combustion engine having at least one cylinder (Z1-Z4) and an exhaust tract (4) in which are disposed the catalytic converter and an exhaust probe (43) downstream of at least part of said catalytic converter, the device being designed to
- completely discharge the oxygen stored in the part of the catalytic converter upstream of the exhaust probe (43),
- set a predefined first lean air/fuel ratio (LAM1_SP) in the combustion chamber of the cylinder (Z1 to Z4),
- determine a first oxygen storage capacity value (OSC1) as a function of the measurement signal (MS) of the exhaust probe (43) and the predefined first lean air/fuel ratio (LAM1_SP),
- completely discharge the oxygen stored in the part of the catalytic converter upstream of the exhaust probe (43),
- set a predefined second lean air/fuel ratio (LAM2 SP) in the combustion chamber of the cylinder (Z1 to Z4),
- determine a second oxygen storage capacity value (OSC2) as a function of the measurement signal (MS) of the exhaust probe (43) and the predefined second lean air/fuel ratio (LAM2_SP) and
- determine a corrected oxygen storage capacity value (OSC_COR) as a function of the first and second oxygen storage capacity values (OSC1, OSC2).

15. Device for determining a dynamic time duration of an exhaust probe of an internal combustion engine having at least one cylinder (Z1) and an exhaust tract (4) in which are disposed the catalytic converter and the exhaust probe (43) downstream of at least part of said catalytic converter, the device being designed to
- oxygenate the part of the catalytic converter upstream of the exhaust probe (43) until it is saturated,
- set a predefined first rich air/fuel ratio (LAM1_SP) in the combustion chamber of the cylinder (Z1 to Z4),
- determine a first oxygen storage capacity value (OSC1) as a function of the measurement signal (MS) of the exhaust probe (43) and the predefined first rich air/fuel ratio (LAM1_SP),
- oxygenate the part of the catalytic converter upstream of the exhaust probe (43) until it is saturated,
- set a predefined second rich air/fuel ratio (LAM2_SP) in the combustion chamber of the cylinder,
- determine a second oxygen storage capacity value (OSC2) as a function of the measurement signal (MS) of the exhaust probe (43) and the predefined first rich air/fuel ratio (LAM1_SP) and
- determine the dynamic time duration (T_DELTA) as a function of the first and second oxygen storage capacity values (OSC1, OSC2).

16. Device for determining a dynamic time duration of an exhaust probe of an internal combustion engine having at least one cylinder (Z1) and an exhaust tract (4) in which are disposed the catalytic converter and the exhaust probe (43) downstream of at least part of said catalytic converter, the device being designed to
- completely discharge the oxygen stored in the part of the catalytic converter upstream of the exhaust probe (43),
- set a predefined first lean air/fuel ratio (LAM1_SP) in the combustion chamber of the cylinder (Z1 to Z4),
- determine a first oxygen storage capacity value (OSC1) as a function of the measurement signal (MS) of the exhaust probe (43) and the predefined first lean air/fuel ratio (LAM1_SP),
- completely discharge the oxygen stored in the part of the catalytic converter upstream of the exhaust probe (43),
- set a predefined second lean air/fuel ratio (LAM2_SP) in the combustion chamber of the cylinder (Z1 to Z4),
- determine a second oxygen storage capacity value (OSC2) as a function of the measurement signal (MS) of the exhaust probe (43) and the predefined second lean air/fuel ratio (LAM2_SP) and
- determine the dynamic time duration (T_DELTA) as a function of the first and second oxygen storage capacity values (OSC1, OSC2).

## Revendications

1. Procédé de détermination d'une capacité de stockage d'oxygène d'un pot catalytique d'un moteur à combustion interne avec au moins un cylindre (Z1 à Z4) et un segment d'échappement (4) dans lequel le pot catalytique et une sonde d'échappement (43) sont disposés en aval d'au moins une partie du pot catalytique, dans lequel
- la partie en amont de la sonde d'échappement (43) du pot catalytique est chargée en oxygène jusqu'à saturation,
- un premier rapport air/carburant riche prédéfini (LAM1_SP) est réglé dans la chambre d'explosion du cylindre (Z1 à Z4),
- une première valeur de capacité de stockage d'oxygène (OSC1) est déterminée en fonction du signal de mesure (MS) de la sonde d'échappement (43) et du premier rapport air/carburant riche prédéfini (LAM1_SP),
- la partie en amont de la sonde d'échappement (43) du pot catalytique est chargée en oxygène jusqu'à saturation,
- un deuxième rapport air/carburant riche prédéfini (LAM2_SP) est réglé dans la chambre d'explosion du cylindre,
- une deuxième valeur de capacité de stockage d'oxygène (OCS2) est déterminée en fonction du signal de mesure (MS) de la sonde d'échappement (43) et du deuxième rapport air/carburant riche prédéfini (LAM2_SP), et
- une valeur de capacité de stockage d'oxygène corrigée (OSC_COR) est déterminée en fonction des première et deuxième valeurs de capacité de stockage d'oxygène (OSC1, OSC2).

2. Procédé de détermination d'une capacité de stockage d'oxygène d'un pot catalytique d'un moteur à combustion interne avec au moins un cylindre (Z1 à Z4) et un segment d'échappement (4) dans lequel le pot catalytique et une sonde d'échappement (43) sont disposés en aval d'au moins une partie du pot catalytique, dans lequel
- l'oxygène stocké dans la partie en amont de la sonde d'échappement (43) du pot catalytique est complètement déchargé,
- un premier rapport air/carburant pauvre prédéfini (LAM1_SP) est réglé dans la chambre d'explosion du cylindre (Z1 à Z4),
- une première valeur de capacité de stockage d'oxygène (OSC1) est déterminée en fonction du signal de mesure (MS) de la sonde d'échappement (43) et du premier rapport air/carburant pauvre prédéfini (LAM1_SP),
- l'oxygène stocké dans la partie en amont de la sonde d'échappement (43) du pot catalytique est complètement déchargé,
- un deuxième rapport air/carburant pauvre prédéfini (LAM2_SP) est réglé dans la chambre d'explosion du cylindre (Z1 à Z4),
- une deuxième valeur de capacité de stockage d'oxygène (OCS2) est déterminée en fonction du signal de mesure (MS) de la sonde d'échappement (43) et du deuxième rapport air/carburant pauvre prédéfini (LAM2_SP), et
- une valeur de capacité de stockage d'oxygène corrigée (OSC_COR) est déterminée en fonction des première et deuxième valeurs de capacité de stockage d'oxygène (OSC1, OSC2).

3. Procédé selon la revendication 1 ou 2, dans lequel
- une valeur de correction (COR) est déterminée en fonction d'une différence de la première et de la deuxième valeur de capacité de stockage d'oxygène (OSC1, OSC2), et
- la valeur de capacité de stockage d'oxygène corrigée (OSC_COR) est déterminée en fonction de la deuxième valeur de capacité de stockage d'oxygène (OSC2) et de la valeur de correction (COR).

4. Procédé selon la revendication 3, dans lequel la valeur de correction (COR) est déterminée à partir d'un champ de caractéristiques en fonction de la différence entre la première et la deuxième valeur de capacité de stockage d'oxygène (OSC1, OSC2).

5. Procédé selon la revendication 3, dans lequel la valeur de correction (COR) est déterminée au moyen d'une fonction linéaire par sections en fonction de la différence entre la première et la deuxième valeur de capacité de stockage d'oxygène (OSC1, OSC2).

6. Procédé selon la revendication 3, dans lequel la valeur de correction (COR) est déterminée en fonction du premier, du deuxième et d'un troisième rapport air/carburant riche ou pauvre (LAM3_SP), le troisième rapport air/carburant riche ou pauvre étant moins riche ou moins pauvre que le premier ou le deuxième.

7. Procédé selon la revendication 6, dans lequel la valeur de correction (COR) est déterminée en fonction d'une différence entre le troisième et le deuxième rapport air/carburant (LAM3_SP, LAM2_SP), divisée par une différence entre le premier et le deuxième rapport air/carburant (LAM1_SP, LAM2_SP).

8. Procédé selon l'une quelconque des revendications précédentes, dans lequel une durée de la dynamique (DELTA_T) est déterminée en fonction de la différence entre la première et la deuxième valeur de capacité de stockage d'oxygène (OSC1, OSC2) et du premier et du deuxième rapport air/carburant (LAM1_SP, LAM2_SP), et la valeur de capacité de stockage d'oxygène corrigée (OSC_COR) est déterminée en fonction de la durée de la dynamique (DELA_T).

9. Procédé selon l'une quelconque des revendications précédentes, dans lequel un diagnostic du pot catalytique est effectué en fonction de la valeur de capacité de stockage d'oxygène corrigée (OSC_COR).

10. Procédé de détermination d'une durée de la dynamique d'une sonde d'échappement d'un moteur à combustion interne avec au moins un cylindre (Z1) et un segment d'échappement (4) dans lequel le pot catalytique et la sonde d'échappement (43) sont disposés en aval d'au moins une partie du pot catalytique, dans lequel
- la partie en amont de la sonde d'échappement (43) du pot catalytique est chargée en oxygène jusqu'à saturation,
- un premier rapport air/carburant riche prédéfini (LAM1_SP) est réglé dans la chambre d'explosion du cylindre (Z1 à Z4),
- une première valeur de capacité de stockage d'oxygène (OSC1) est déterminée en fonction du signal de mesure (MS) de la sonde d'échappement (43) et du premier rapport air/carburant riche prédéfini (LAM1_SP),
- la partie en amont de la sonde d'échappement (43) du pot catalytique est chargée en oxygène jusqu'à saturation,
- un deuxième rapport air/carburant riche prédéfini (LAM2_SP) est réglé dans la chambre d'explosion du cylindre,
- une deuxième valeur de capacité de stockage d'oxygène (OCS2) est déterminée en fonction du signal de mesure (MS) de la sonde d'échappement (43) et du premier rapport air/carburant riche prédéfini (LAM1_SP), et
- la durée de la dynamique (T_DELTA) est déterminée en fonction des première et deuxième valeurs de capacité de stockage d'oxygène (OSC1, OSC2).

11. Procédé de détermination d'une durée de la dynamique d'une sonde d'échappement d'un moteur à combustion interne avec au moins un cylindre (Z1) et un segment d'échappement (4) dans lequel le pot catalytique et la sonde d'échappement (43) sont disposés en aval d'au moins une partie du pot catalytique, dans lequel
- l'oxygène stocké dans la partie en amont de la sonde d'échappement (43) du pot catalytique est complètement déchargé,
- un premier rapport air/carburant pauvre prédéfini (LAM1_SP) est réglé dans la chambre d'explosion du cylindre (Z1 à Z4),
- une première valeur de capacité de stockage d'oxygène (OSC1) est déterminée en fonction du signal de mesure (MS) de la sonde d'échappement (43) et du premier rapport air/carburant pauvre prédéfini (LAM1_SP),
- l'oxygène stocké dans la partie en amont de la sonde d'échappement (43) du pot catalytique est complètement déchargé,
- un deuxième rapport air/carburant pauvre prédéfini (LAM2_SP) est réglé dans la chambre d'explosion du cylindre (Z1 à Z4),
- une deuxième valeur de capacité de stockage d'oxygène (OCS2) est déterminée en fonction du signal de mesure (MS) de la sonde d'échappement (43) et du deuxième rapport air/carburant pauvre prédéfini (LAM2_SP), et
- la durée de la dynamique (T_DELTA) est déterminée en fonction des première et deuxième valeurs de capacité de stockage d'oxygène (OSC1, OSC2).

12. Procédé selon la revendication 10 ou 11, dans lequel un diagnostic de la sonde d'échappement (43) est effectué en fonction de la durée de la dynamique (DELTA T).

13. Dispositif de détermination d'une capacité de stockage d'oxygène d'un pot catalytique d'un moteur à combustion interne avec au moins un cylindre (Z1 à Z4) et un segment d'échappement (4) dans lequel le pot catalytique et une sonde d'échappement (43) sont disposés en aval d'au moins une partie du pot catalytique, dans lequel le dispositif est réalisé pour
- charger la partie en amont de la sonde d'échappement (43) du pot catalytique en oxygène jusqu'à saturation,
- régler un premier rapport air/carburant riche prédéfini (LAM1_SP) dans la chambre d'explosion du cylindre (Z1 à Z4),
- déterminer une première valeur de capacité de stockage d'oxygène (OSC1) en fonction du signal de mesure (MS) de la sonde d'échappement (43) et du premier rapport air/carburant riche prédéfini (LAM1_SP),
- charger la partie en amont de la sonde d'échappement (43) du pot catalytique en oxygène jusqu'à saturation,
- régler un deuxième rapport air/carburant riche prédéfini (LAM2_SP) dans la chambre d'explosion du cylindre,
- déterminer une deuxième valeur de capacité de stockage d'oxygène (OCS2) en fonction du signal de mesure (MS) de la sonde d'échappement (43) et du deuxième rapport air/carburant riche prédéfini (LAM2_SP), et
- déterminer une valeur de capacité de stockage d'oxygène corrigée (OSC_COR) en fonction des première et deuxième valeurs de capacité de stockage d'oxygène (OSC1, OSC2).

14. Dispositif de détermination d'une capacité de stockage d'oxygène d'un pot catalytique d'un moteur à combustion interne avec au moins un cylindre (Z1 à Z4) et un segment d'échappement (4) dans lequel le pot catalytique et une sonde d'échappement (43) sont disposés en aval d'au moins une partie du pot catalytique, dans lequel le dispositif est réalisé pour
- décharger complètement l'oxygène stocké dans la partie en amont de la sonde d'échappement (43) du pot catalytique,
- régler un premier rapport air/carburant pauvre prédéfini (LAM1_SP) dans la chambre d'explosion du cylindre (Z1 à Z4),
- déterminer une première valeur de capacité de stockage d'oxygène (OSC1) en fonction du signal de mesure (MS) de la sonde d'échappement (43) et du premier rapport air/carburant pauvre prédéfini (LAM1_SP),
- décharger complètement l'oxygène stocké dans la partie en amont de la sonde d'échappement (43) du pot catalytique,
- régler un deuxième rapport air/carburant pauvre prédéfini (LAM2_SP) dans la chambre d'explosion du cylindre (Z1 à Z4),
- déterminer une deuxième valeur de capacité de stockage d'oxygène (OCS2) en fonction du signal de mesure (MS) de la sonde d'échappement (43) et du deuxième rapport air/carburant pauvre prédéfini (LAM2_SP), et
- déterminer une valeur de capacité de stockage d'oxygène corrigée (OSC_COR) en fonction des première et deuxième valeurs de capacité de stockage d'oxygène (OSC1, OSC2).

15. Dispositif de détermination d'une durée de la dynamique d'une sonde d'échappement d'un moteur à combustion interne avec au moins un cylindre (Z1) et un segment d'échappement (4) dans lequel le pot catalytique et une sonde d'échappement (43) sont disposés en aval d'au moins une partie du pot catalytique, dans lequel le dispositif est réalisé pour
- charger la partie en amont de la sonde d'échappement (43) du pot catalytique en oxygène jusqu'à saturation,
- régler un premier rapport air/carburant riche prédéfini (LAM1_SP) dans la chambre d'explosion du cylindre (Z1 à Z4),
- déterminer une première valeur de capacité de stockage d'oxygène (OSC1) en fonction du signal de mesure (MS) de la sonde d'échappement (43) et du premier rapport air/carburant riche prédéfini (LAM1_SP),
- charger la partie en amont de la sonde d'échappement (43) du pot catalytique en oxygène jusqu'à saturation,
- régler un deuxième rapport air/carburant riche prédéfini (LAM2_SP) dans la chambre d'explosion du cylindre,
- déterminer une deuxième valeur de capacité de stockage d'oxygène (OCS2) en fonction du signal de mesure (MS) de la sonde d'échappement (43) et du premier rapport air/carburant riche prédéfini (LAM1_SP), et
- déterminer la durée de la dynamique (T_DELTA) en fonction des première et deuxième valeurs de capacité de stockage d'oxygène (OSC1, OSC2).

16. Dispositif de détermination d'une durée de la dynamique d'une sonde d'échappement d'un moteur à combustion interne avec au moins un cylindre (Z1) et un segment d'échappement (4) dans lequel le pot catalytique et la sonde d'échappement (43) sont disposés en aval d'au moins une partie du pot catalytique, dans lequel le dispositif est réalisé pour
- décharger complètement l'oxygène stocké dans la partie en amont de la sonde d'échappement (43) du pot catalytique,
- régler un premier rapport air/carburant pauvre prédéfini (LAM1_SP) dans la chambre d'explosion du cylindre (Z1 à Z4),
- déterminer une première valeur de capacité de stockage d'oxygène (OSC1) en fonction du signal de mesure (MS) de la sonde d'échappement (43) et du premier rapport air/carburant pauvre prédéfini (LAM1_SP),
- décharger complètement l'oxygène stocké dans la partie en amont de la sonde d'échappement (43) du pot catalytique,
- régler un deuxième rapport air/carburant pauvre prédéfini (LAM2_SP) dans la chambre d'explosion du cylindre (Z1 à Z4),
- déterminer une deuxième valeur de capacité de stockage d'oxygène (OCS2) en fonction du signal de mesure (MS) de la sonde d'échappement (43) et du deuxième rapport air/carburant pauvre prédéfini (LAM2_SP), et
- déterminer la durée de la dynamique (T_DELTA) en fonction des première et deuxième valeurs de capacité de stockage d'oxygène (OSC1, OSC2).
